(19) **Europäisches Patentamt**

**European Patent Office**

**Office européen des brevets**

(11) **EP 0 905 418 B1**

(12) **EUROPÄISCHE PATENTSCHRIFT**

(45) Veröffentlichungstag und Bekanntmachung des Hinweises auf die Patenterteilung:
**17.12.2003 Patentblatt 2003/51**

(51) Int Cl.⁷: **F16H 63/42**

(21) Anmeldenummer: **98113383.8**

(22) Anmeldetag: **17.07.1998**

(54) **Elektronische Steuerung und Verfahren zum Schalten eines halbautomatischen KFZ-Getriebes**

Electronical control device and shift method for semi-automatic motor vehicle transmission

Dispositif de commande éléctronique et méthode de changement de vitesses pour transmission véhiculaire semi-automatique

(84) Benannte Vertragsstaaten:
**DE FR IT SE**

(30) Priorität: **30.09.1997 DE 19743180**

(43) Veröffentlichungstag der Anmeldung:
**31.03.1999 Patentblatt 1999/13**

(73) Patentinhaber: **WABCO GmbH & Co. OHG**
**30453 Hannover (DE)**

(72) Erfinder:
• **Bortfeld, Harald**
**30900 Wedemark (DE)**
• **Winkelholz, Uwe**
**30449 Hannover (DE)**

• **Klatt, Alfred**
**29339 Wathlingen (DE)**

(74) Vertreter: **Schrödter, Manfred, Dipl.-Ing.**
**WABCO GmbH & Co. OHG**
**Postfach 91 12 62**
**30432 Hannover (DE)**

(56) Entgegenhaltungen:
**DE-A- 3 007 953       DE-A- 3 822 316**

• **PATENT ABSTRACTS OF JAPAN vol. 1996, no. 02, 29. Februar 1996 (1996-02-29) & JP 07 251646 A (NISSAN DIESEL MOTOR CO LTD), 3. Oktober 1995 (1995-10-03)**

## Beschreibung

Die Erfindung bezieht sich auf ein Verfahren zum Schalten eines halbautomatischen, elektronisch gesteuerten Getriebes für Kraftfahrzeuge gemäß dem Oberbegriff des Patentanspruchs 1 und auf eine elektronische Getriebesteuerung gemäß den Oberbegriff des Anspruchs 14, wie sie aus der DE-A-3007953 bekannt geworden sind.

Als halbautomatisch werden solche Getriebe bezeichnet, bei denen noch eine Kupplung mit einem Kupplungspedal vorhanden ist, welches vom Fahrer während eines Schaltvorganges betätigt werden muß. Üblich ist bei derartigen Getrieben, daß eine Ganganzeige vorgesehen ist, auf welcher ein von einer Schaltelektronik berechneter eingelegter Gang angezeigt wird. Falls der Fahrer einen neuen Gang einlegen möchte, betätigt er den Hebel eines Schaltbefehlsgebers, welcher den Schaltwunsch an die Elektronik weiterleitet. Die Schaltelektronik berechnet einen günstigen Gang, der auf der Ganganzeige blinkend angezeigt wird. Gleichzeitig muß der Fahrer die Kupplung durch Betätigung des Kupplungspedals auftrennen. Durch die o. g. Elektronik werden dann im allgemeinen Ventile geschaltet, welche an einen Druckmittelvorrat angeschlossen sind, und über Arbeitszylinder die entsprechenden Schaltmuffen im Getriebe so verschieben, daß die gewünschte Rauf- oder Runterschaltung ausgeführt wird.

Sobald dieser Schaltvorgang beendet ist, wird durch die Elektronik eine Rückmeldeeinrichtung angesteuert, durch welche der Fahrer auf die im Getriebe vollzogene Umschaltung aufmerksam gemacht wird. Hieraufhin muß der Fahrer die Kupplung über das Kupplungspedal wieder einkuppeln. Die Rückmeldeeinrichtung kann optisch, akustisch oder haptisch ausgebildet sein.

Aus der DE-A-30 07 953 ist eine Gangschaltung für ein mit Fremdkraft betätigtes Getriebe bekannt. Dieses hat einen Schaltbefehlsgeber, dessen Hebel durch den Fahrer zunächst in eine Sperrposition geschoben werden kann. Hierdurch wird die Gangumschaltung eingeleitet. Sobald diese vollendet ist, wird der Schalthebel aus der Sperrposition mittels eines Sperrstiftes freigegeben und kann dann weiter bis in eine Endposition geschwenkt werden. Durch diese "haptische" Rückmeldung der Gangumschaltung wird dem Fahrer ohne Ablenkung durch optische oder akustische Signale mitgeteilt, daß er nun die Kupplung wieder einlegen kann.

Bekannt ist weiter aus der DE-C-33 29 802 eine Schaltvorrichtung für ein synchronisiertes Getriebe, bei welchem die Bewegung der Schiebemuffen bzw. der mit diesen verbundenen Betätigungszylindern bzw. Gestängen mittels Weggebern erfaßt wird.

Nachteilig an den bekannten Anordnungen ist die relativ lange für die Gangschaltung benötigte Gesamtzeit, da diese die unterschiedlich lange Reaktionszeit des Fahrers für das Wiedereinlegen der Kupplung mit einschließt.

Der Erfindung liegt nun die Aufgabe zugrunde, ein Verfahren zum Schalten eines halbautomatischen Kraftfahrzeug-Getriebes anzugeben, welches eine Verkürzung der Gesamt-Schaltzeit und damit der während der Schaltung auftretenden Kraftflußunterbrechung ermöglicht.

Diese Aufgabe wird durch die im Patentanspruch 1 und 14 enthaltene Erfindung gelöst. Die Unteransprüche enthalten zweckmäßige Weiterbildungen.

Durch die Erfindung ist es möglich, die Gesamtschaltdauer einer Gangumschaltung erheblich zu verkürzen, und vom Reaktionsvermögen des Fahrers unabhängiger zu machen. Im Gegensatz zum Stand der Technik wird das Rückmeldesignal nicht erst bei vollzogener Gangumschaltung, sondern schon früher, bei Beginn der Synchronisierung, abgegeben. Die hierdurch bewirkte Verkürzung der Kraftfluß-Unterbrechung beim Fahrzeug wirkt sich besonders bei Fahrten im Gefälle oder in einer Steigung günstig aus, da sich hier die Geschwindigkeit des Fahrzeuges während der Schaltpause weniger ändert.

Die Erfindung wird im folgenden anhand einer Zeichnung näher erläutert. Diese zeigt in

Fig. 1     ein schematisches Blockschaltbild des Antriebsstranges eines KFZ mit einem elektronisch gesteuerten hilfskraftbetätigten Getriebe, und in

Fig. 2     ein Diagramm der Eingangswellendrehzahl ($N_E$) des Getriebes sowie des Weges (S) einer Schiebemuffe der Synchronisiereinrichtung über der Zeit (t) während eines Schaltvorganges.

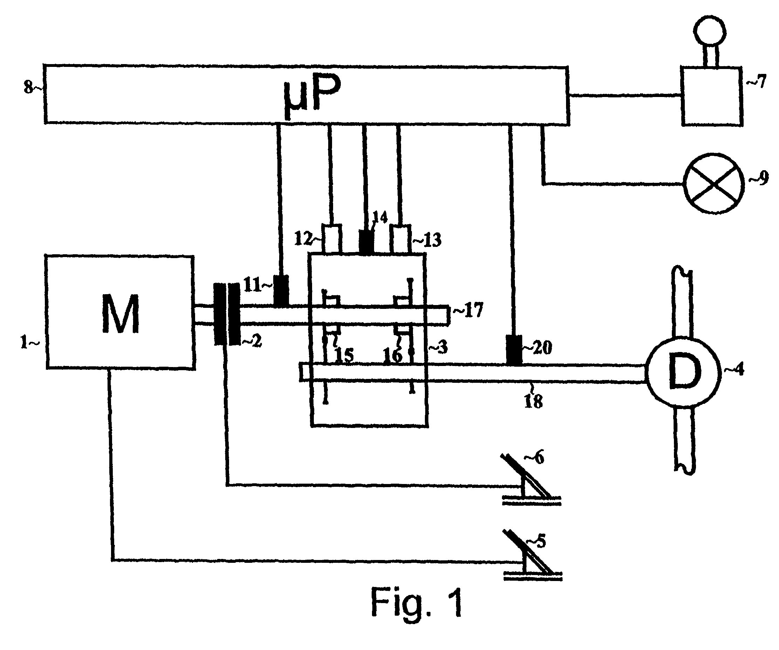

In der Fig. 1 ist schematisch das Blockschaltbild des gesamten Antriebsstranges eines Kraftfahrzeuges mit einem hilfskraftbetätigten, elektronisch gesteuerten Getriebe (3) dargestellt. An einen Motor M (1) ist eine Scheibenkupplung (2) angeschlossen, welche mit einer Eingangswelle (17) des Getriebes (3) verbunden ist. Die Eingangswelle (17) treibt in bekannter Weise über mehrere, ständig im Eingriff befindliche Zahnräder eine Getriebeausgangswelle (18) an. Diese ist an ein übliches Differential D (4) angeschlossen.

Die Zahnräder der Eingangswelle (17) können über Schiebemuffen (15, 16) beliebig mit dieser gekuppelt werden. Hierzu dienen Betätigungselemente (12, 13), welche aus Magnetventilen und Arbeitszylindern bestehen. Durch die genannten Magnetventile läßt sich ein Druckmittel, das einem (nicht dargestellten) Vorratsbehälter entstammt, zur Verschiebung der Schiebemuffen (15, 16) ausnutzen. Als Druckmittel kann z. B. Druckluft verwendet werden.

Der Motor (1) kann vom Fahrer über ein Gaspedal (5), und die Kupplung (2) über ein Kupplungspedal (6) gesteuert werden. Zur Auswahl von Gängen kann der Fahrer einen Schaltbefehlsgeber (7) betätigen. Ein mit diesem vorgewählter Gang wird einer Elektronik (8), welche eine Mikroprozessor-Steuerung (μP) enthält, mitgeteilt. Die Elektronik (8) steuert daraufhin die entsprechenden Betätigungselemente (12, 13) zur Umschaltung des Ganges an. Die Verschiebewege der Schiebemuffen (15, 16) werden von Wegsensoren (14) abgefühlt und der Elektronik (8) zurückgemeldet. Weiterhin wird auch die Drehzahl der Getriebeeingangswelle (17) über einen Drehzahlsensor (10, 11) der Elektronik (8) mitgeteilt. Ein weiterer Drehzahlsensor (20) erfaßt die Drehzahl der Getriebeausgangswelle (18).

Sobald die Elektronik (8) durch die Wegsensoren (14) für die Schiebemuffen (15, 16) sensiert hat, daß die beabsichtigte Gangschaltung vollzogen ist, wird ein Rückmeldesignal auf eine Rückmeldeeinrichtung (9) geleitet. Diese kann, wie dargestellt, optisch, aber auch akustisch oder haptisch ausgebildet sein. Der Fahrer erkennt aus der angesteuerten Rückmeldeeinrichtung (9), daß die interne Gangumschaltung im Getriebe (3) vollzogen ist, und kann daraufhin die Kupplung (2) durch Loslassen des Kupplungspedals (6) wieder schließen.

Damit die Elektronik (8) der Gangumschaltsteuerung universell für Getriebe (3) verschiedener Bauart verwendbar ist, werden in bekannter Weise bei der ersten Betriebnahme oder auch während des Betriebes, die Stellungssignale der Weggeber (14) innerhalb der Elektronik (8) per Programm mittels Einlernvorgängen kalibriert.

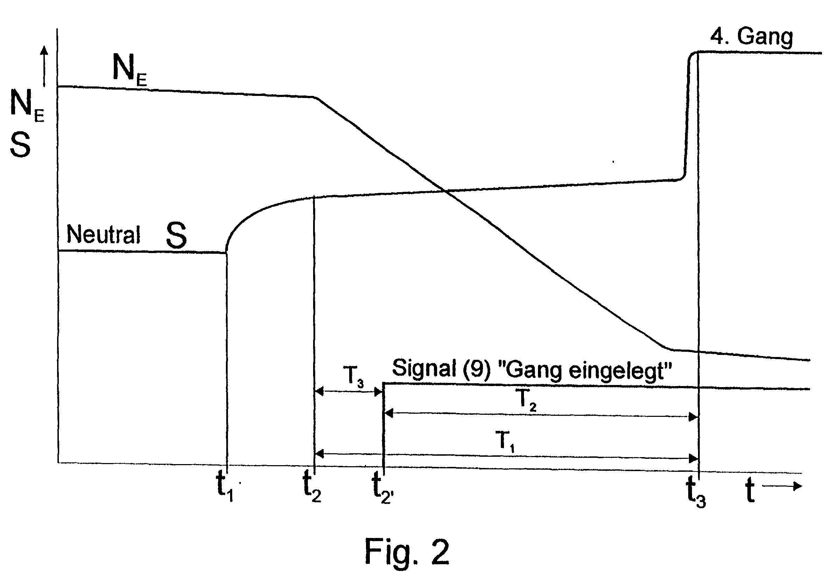

Im Diagramm der Fig. 2 ist beispielhaft ein Schaltvorgang, und zwar von Neutral in den vierten Gang, über der Zeit (t) dargestellt. Das Fahrzeug ist vorher im dritten Gang gefahren. Wie man sieht, sinkt die Drehzahl ($N_E$) der Getriebeeingangswelle durch die Umschaltung auf einen niedrigeren Wert ab. Die Fahrzeuggeschwindigkeit (nicht dargestellt) bleibt während der Schalthandlung etwa konstant.

Der Weg (S) der Schiebemuffe (15 oder 16) steigt zu Beginn der Schaltung ($t_1$) zunächst an, bis im Zeitpunkt $t_2$ eine Schleifstellung erreicht ist, und der eigentliche Synchronisiervorgang beginnt. Ab diesem Zeitpunkt ändert sich der Weg (S) kaum noch. Die Synchronisierung ist kur vor dem Zeitpunkt $t_3$ abgeschlossen. Jetzt haben sich die Drehzahlen von Getriebeeingangswelle und Zahnrad des neuen Ganges angeglichen. Die Eingangswelle und das Zahnrad können jetzt durch eine Sperrklinke formschlüssig verbunden werden. Dies ist erkennbar an einem nochmaligen Anstieg des Weges (S) der Schiebemuffe (15 oder 16) kurz vor dem Zeitpunkt $t_3$.

Um nun gemäß der Erfindung den gesamten Schaltvorgang zu beschleunigen, wird durch Auswertung des Signals des betreffenden Wegsensors (14) bereits zum Zeitpunkt $t_2$ erkannt, daß die Synchronisierung angefangen hat. Bereits zu diesem Zeitpunkt kann die Rückmeldeeinrichtung (9) angesteuert werden. Hierdurch kann der Fahrer mit dem Wiedereinlegen der Kupplung früher beginnen.

Zweckmäßig wertet die Elektronik (8) zur Erhöhung der Sicherheit gegen Fehler ständig eine Anzahl von Wegwerten, und zwar etwa 10 Werte der Wegsensoren (14) der Synchronisiereinrichtung aus. Dabei wird jeweils der älteste Wert weggelassen und der neueste Wert hinzugenommen. Die zeitliche Abtastung der Stellung der Wegsensoren durch die Elektronik erfolgt zweckmäßig in einem 5 ms-Raster. Zur Sicherheit erfolgt dann eine Mittelwertbildung der ausgewerteten Wegwerte. Dieser Mittelwert wird nun mit dem nächstfolgenden Mittelwert verglichen, und so ein Gradient gebildet. Aus dem Gradienten der gemittelten Wegwerte wird der Beginn des Synchronisierungsvorganges zum Zeitpunkt $t_2$ erkannt. Die Rückmeldeeinrichtung (9) wird von der Elektronik (8) bereits dann angesteuert, wenn der obengenannte Gradient der gemittelten Wegwerte eine festgelegte Schwelle unterschreitet, d. h. wenn sich der Weg (S) nur noch mit einer bestimmten, kleinen Geschwindigkeit erhöht. Dies ist kurz nach dem Zeitpunkt $t_2$ der Fall.

Damit der Fahrer die Kupplung nicht zu früh schließt, kann zweckmäßig eine minimale Reaktionszeit des Fahrers, die erfahrungsgemäß etwa $T_2 = 300$ ms beträgt, berücksichtigt werden. Die Rückmeldeeinrichtung (9) wird dann also zweckmäßig erst nur einer Zeit $T_3$ verzögert nach dem Zeitpunkt $t_2$ zu einem Zeitpunkt $t_2'$ angesteuert (s. Fig. 2). Die Verzögerungszeit $T_3$ ist so bemessen, daß die Summe aus $T_2$ und $T_3$ in jedem Fall hinter dem Zeitpunkt $t_3$ liegt. Die Zeit $T_3$ läßt sich errechnen aus

$$T_3 = T_1 - T_2$$

wobei $T_1$ die Gesamtdauer des Synchronisiervorganges ist (siehe unten).

Es hat sich weiter als zweckmäßig herausgestellt, die Länge der Verzögerungszeit $T_3$ von der Getriebetemperatur und/oder der Art des Gangsprunges abhängig zu machen, da diese Daten die Länge $T_1$ einer Gangumschaltung beeinflussen.

Die Wegsensoren (14) zur Erkennung der Verschiebung der Schiebemuffen (15, 16) können an verschiedenen Stellen angebracht sein. So können direkt die Wege der Muffen ausgewertet werden, es können aber auch die Wege der Betätigungseinrichtungen (Kolben der Arbeitszylinder) in den Betätigungselementen (12, 13) abgefühlt werden. Die Wegsensoren können schließlich auch an den Verbindungsgestängen angebracht sein.

Der Beginn des Synchronisiervorganges kann alternativ auch aus der Änderung der Drehzahl ($N_E$) der Getriebeeingangswelle (17) erkannt werden. Wie aus der Fig. 2 ersichtlich ist, zeigt die Drehzahl ($N_E$) der Getriebeeingangswelle zum Zeitpunkt $t_2$, dem Beginn der Synchronisierung, einen deutlichen Knick. Dieser kann in gleicher Weise, wie oben für den Schiebemuffenweg beschrieben, ausgewertet werden.

Die beiden Anzeichen des Beginns der Synchronisierung, nämlich die Wegverläufe der Schiebemuffen (15, 16) sowie der Knick der Eingangsdrehzahl ($N_E$) der Getriebeeingangswelle (17), können zweckmäßigerweise auch kombiniert von der Elektronik (8) ausgewertet werden.

Die voraussichtliche Dauer $T_1$ eines Synchronisiervorganges kann aus dem Gradienten der Getriebeeingangswellendrehzahl im Bereich zwischen $t_2$ und $t_3$ schon frühzeitig berechnet werden. Dies erfolt nach der Formel

$$T_1 = (N_A - N_E) / \frac{\Delta N_E}{\Delta t}$$

mit

$N_A$ =      Drehzahl der Getriebeausgangswelle (18) (bezogen auf die Getriebeeingangswelle)

$N_E$ =      Drehzahl der Getriebeeingangswelle (17)

$\frac{\Delta N_E}{\Delta t}$ =      Gradient der Drehzahl $N_E$ zwischen $t_2$ und $t_3$.

Der Wert von $T_1$ beträgt typischerweise etwa 500 ms. Hat man so die voraussichtliche jeweilige Dauer der Gangumschaltung schon kurz nach dem Knickpunkt von $N_E$ (Zeitpunkt $t_2$) berechnet, kann man den Zeitpunkt $t_2'$ für die Ansteuerung des Signalgebers (9) noch genauer so legen, daß nach Ablauf der typischen, kleinsten Reaktionszeit $t_2$ des Fahrers von 300 ms die Umschaltung im Getriebe bereits vollzogen ist (Zeitpunkt $t_3$).

Der Zeitpunkt für $t_2'$ berechnet sich dann zu

$$t_2' = t_2 + (T_1 - T_2)$$

mit

$t_2$ =      Zeitpunkt des Knickes in $N_E$ oder S

$T_1$ =      Dauer der Synchronisierung

$T_2$ =      minimale Reaktionszeit des Fahrers.

**Patentansprüche**

1.  Verfahren zum Schalten eines halbautomatischen, durch eine Elektronik (8) mit Mikroprozessor (µP) gesteuerten Getriebes (3) für Kraftfahrzeuge mit einem Schaltbefehlsgeber (7) zum Einleiten einer Gangschaltung, einer Kupplung (2), und mit einer Rückmeldeeinrichtung (9) zur Rückmeldung einer vollzogenen Gangschaltung an den Fahrer, **dadurch gekennzeichnet, daß** die Rückmeldung bereits zu Beginn des Synchronisiervorganges des Getriebes (3) abgegeben wird.

2.  Verfahren nach Anspruch 1, **dadurch gekennzeichnet, daß** der Beginn des Synchronisiervorganges durch die Elektronik (8) aus dem Wegverlauf (s) einer zur Synchronisierung des Getriebes (3) dienenden Schiebemuffe (15 oder 16) erkannt wird.

3.  Verfahren nach Anspruch 1 bis 2, **dadurch gekennzeichnet, daß** die Elektronik (8) ständig eine Anzahl von zeitlich aufeinanderfolgenden Wegwerten (s) der Synchronisiereinrichtung auswertet, wobei jeweils der älteste Wert weggelassen wird und der neueste Weg hinzugenommen wird.

4.  Verfahren nach Anspruch 3, **dadurch gekennzeichnet, daß** die Auswertung im 5 Millisekunden-Raster erfolgt, und die Zahl der ausgewerteten Wegwerte (s) etwa 10 beträgt.

5.  Verfahren nach Anspruch 3 bis 4, **dadurch gekennzeichnet, daß** eine Mittelwertbildung der ausgewerteten Wegwerte (s) erfolgt.

6.  Verfahren nach Anspruch 3 bis 5, **dadurch gekennzeichnet, daß** die Elektronik (8) aus dem Gradienten der gemittelten Wegwerte (s) den Beginn des Synchronisierungsvorganges erkennt.

7.  Verfahren nach Anspruch 6, **dadurch gekennzeichnet, daß** die Rückmeldeeinrichtung (9) von der Elektronik (8) dann angesteuert wird, wenn der Gradient der gemittelten Wegwerte (s) eine festgelegte Schwelle unterschreitet, und eine Verzögerungszeit ($T_3$) abgelaufen ist.

8.  Verfahren nach Anspruch 7, **dadurch gekennzeichnet, daß** die Verzögerungszeit ($T_3$) eine minimale Reaktionszeit ($T_2$) des Fahrers berücksichtigt.

9.  Verfahren nach Anspruch 8, **dadurch gekennzeichnet, daß** die Länge der Verzögerungszeit ($T_3$) zusätzlich von der Getriebetemperatur und/oder der Art des Gangsprunges abhängig gemacht wird.

10. Verfahren nach Anspruch 1, **dadurch gekennzeichnet, daß** der zeitliche Verlauf des Synchronisiervorgangs durch die Elektronik (8) aus einer Änderung der Drehzahl ($N_E$) einer Getriebeeingangswelle (17) erkannt wird.

11. Verfahren nach Anspruch 10, **dadurch gekennzeichnet, daß** der Gradient der Drehzahl ($N_E$) gebildet wird, und daß aus diesem die jeweilige Dauer ($T_1$) des Synchronisiervorganges berechnet wird.

**12.** Verfahren nach Anspruch 11, <u>**dadurch gekennzeichnet,**</u> **daß** die Dauer ($T_1$) des Synchronisiervorganges berechnet wird aus

$$T_1 = (N_A - N_E) / \frac{\Delta N_E}{\Delta t}$$

mit

$N_A$ =      Drehzahl der Getriebeausgangswelle (18) (bezogen auf die Getriebeeingangswelle)

$N_E$ =      Drehzahl der Getriebeeingangswelle (17)

$\frac{\Delta N_E}{\Delta t}$ =      Gradient der Drehzahl $N_E$ zwischen $t_2$ und $t_3$.

**13.** Verfahren nach einem oder mehreren der Ansprüche 1 - 12, **dadurch gekennzeichnet, daß** der Zeitpunkt $t_2'$ für die Ansteuerung des Signalgebers (9) berechnet wird aus

$$t_2' = t_2 + (T_1 - T_2)$$

mit

$t_2$ =      Zeitpunkt des Knickes in $N_E$ oder S
$T_1$ =      Dauer des Synchronisiervorganges
$T_2$ =      minimale Reaktionszeit des Fahrers.

**14.** Elektronische Getriebesteuerung zur Anwendung des Verfahrens nach einem oder mehreren der Ansprüche 1 bis 13, mit einem Mikroprozessor [µP], einem Schaltbefehlsgeber (7) zur Einleiten einer Gangschaltung und mit einer Rückmeldeeinrichtung (9) zur Rückmeldung einer vollzogenen Gangschaltung an der Fahrer <u>**dadurch gekennzeichnet, daß**</u> zur Erkennung des Synchronisier-Vorganges an Schiebemuffen (15, 16) oder an deren Betätigungsvorrichtungen (12, 13) Wegsensoren (14) angebracht sind, und dass die Rückmeldeeinrichtung (9) die Rückmeldung bereits zu Beginn des Synchronisiervorganges des Getriebes (3) abgibt.

**15.** Elektronische Getriebesteuerung nach Anspruch 14, **dadurch gekennzeichnet, daß** die Drehzahlen ($N_E$, $N_A$) der Getriebeeingangswelle (17) und der Getriebeausgangswelle (18) mittels Sensoren (11, 20) abfühlbar sind.

**16.** Elektronische Getriebesteuerung nach Anspruch 14, **dadurch gekennzeichnet, daß** die Rückmeldeeinrichtung (9) optisch, akustisch oder haptisch ausgebildet ist.

**Claims**

**1.** Method for changing a semi-automatic gear unit (3) controlled by electronics (8) with a microprocessor (µP) for motor vehicles having a gear change command initiator (7) for initiating a gear change, a clutch (2), and having an indicator device (9) for indicating a completed gear change to the driver, **characterised in that** the indication is produced at the start of the synchronisation process of the gear unit (3).

**2.** Method according to claim 1, **characterised in that** the start of the synchronisation process is recognised by the electronics (8) from the travel (s) of a sliding sleeve (15 or 16) serving for synchronisation of the gear unit (3).

**3.** Method according to claims 1 and 2, **characterised in that** the electronics (8) continuously evaluates a number of successive displacement values (S) of the synchronisation device, the oldest value being excluded and the newest displacement being added each time.

**4.** Method according to claim 3, **characterised in that** the evaluation is effected on a 5 millisecond basis, and the number of evaluated displacement values (s) amounts to about 10.

**5.** Method according to claims 3 and 4, **characterised in that** the mean value of the evaluated displacement values (s) is formed.

**6.** Method according to claims 3 to 5, **characterised in that** the electronics (8) recognises the start of the synchronisation process from the gradient of the averaged displacement values (s).

**7.** Method according to claim 6, **characterised in that** the indicator device (9) is triggered by the electronics (8) when the gradient of the averaged displacement values (s) falls below a fixed threshold, and a delay time ($T_3$) has expired.

**8.** Method according to claim 7, **characterised in that** the delay time ($T_3$) takes into account a minimum response time ($T_2$) of the driver.

**9.** Method according to claim 8, **characterised in that** the length of the delay time ($T_3$) is additionally made dependent on the gear unit temperature and/or on the kind of gear change.

**10.** Method according to claim 1, **characterised in that** the time progression of the synchronisation process is recognised by the electronics (8) from a change in the rotational speed ($N_E$) of a gear unit input shaft (17).

11. Method according to claim 10, **characterised in that** the gradient of the rotational speed ($N_E$) is formed and **in that** from this the particular duration ($T_1$) of the synchronisation process is calculated.

12. Method according to claim 11, **characterised in that** the duration ($T_1$) of the synchronisation process is calculated from

$$T_1 = (N_A - N_E)/\frac{\Delta N_E}{\Delta t}$$

with

$N_A =$      rotational speed of the gear output shaft (18) (related to the gear input shaft)

$N_E =$      rotational speed of the gear input shaft (17)

$\frac{\Delta N_E}{\Delta t} =$      gradient of the rotational speed $N_E$ between $t_2$ and $t_3$.

13. Method according to one or more of claims 1 to 12, **characterised in that** the point in time $t_2'$ for triggering of the signal producer (9) is calculated from

$$t_2' = t_2 + (T_1 - T_2)$$

with

$t_2 =$      point in time of the bend in $N_E$ or S

$T_1 =$      duration of the synchronisation process

$T_2 =$      minimum response time of the driver.

14. Electronic gear unit control for implementing the method according to one or more of claims 1 to 13, having a microprocessor ($\mu$P), having a gear change command initiator (7) for initiating a gear change, and having an indicator device (9) for indicating a completed gear change to the driver, **characterised in that**, to recognise the synchronisation process, displacement sensors (14) are mounted on sliding sleeves (15, 16) or on their operating devices (12,13), and **in that** the indicator device (9) produces the indication at the start of the synchronisation process of the gear unit (3).

15. Electronic gear unit control according to claim 14, **characterised in that** the rotational speeds ($N_E$, $N_A$) of the gear unit input shaft (17) and the gear unit output shaft (18) are arranged to be detected by means of sensors (11, 20).

16. Electronic gear unit control according to claim 14, **characterised in that** the indicator device (9) is of optical, acoustic or haptic construction.

## Revendications

1. Procédé pour commuter une boîte de vitesses semi-automatique (3), commandée par une unité électronique (8) comportant un microprocesseur ($\mu$P), pour des véhicules automobiles, comportant un générateur (16) d'instructions de commutation pour déclencher un changement de vitesse, un embrayage (2), un dispositif de signalisation en retour (9) pour signaler en retour un changement de vitesse complètement exécuté au niveau du conducteur, **caractérisé en ce que** la signalisation en retour est délivrée déjà au début du processus de synchronisation de la boîte de vitesses (3).

2. Procédé selon la revendication 1, **caractérisé en ce que** le début du processus de synchronisation est identifié par l'unité électronique (8) à partir de l'allure de déplacement (s) d'un manchon coulissant (15 ou 16), qui est utilisé pour synchroniser la boîte de vitesses (3).

3. Procédé selon les revendications 1 et 2, **caractérisé en ce que** l'unité électronique (8) évalue en permanence un nombre de valeurs de déplacement (s), qui se succèdent dans le temps, du dispositif de synchronisation, la valeur respective la plus ancienne étant supprimée et le trajet de déplacement le plus récent étant ajouté.

4. Procédé selon la revendication 3, **caractérisé en ce que** l'évaluation s'effectue dans la trame de 5 millisecondes, et le nombre des valeurs de déplacement évaluées (s) est égal à environ 10.

5. Procédé selon les revendications 3 et 4, **caractérisé en ce qu'**on effectue une formation de la valeur moyenne des valeurs de déplacement évaluées (s).

6. Procédé selon les revendications 3 à 5, **caractérisé en ce que** l'unité électronique (8) identifie, à partir du gradient de la moyenne des valeurs de déplacement (s), le début du processus de synchronisation.

7. Procédé selon la revendication 6, **caractérisé en ce que** le dispositif de signalisation en retour (9) est commandé par l'unité électronique (8) lorsque le gradient de la moyenne des valeurs de déplacement (s) tombe au-dessous d'un seuil fixé, et qu'un temps de retard ($T_3$) s'est écoulé.

**8.** Procédé selon la revendication 7, **caractérisé en ce que** le temps de retard ($T_3$) prend en compte un temps minium de réaction ($T_2$) du conducteur.

**9.** Procédé selon la revendication 8, **caractérisé en ce que** la longueur du temps de retard ($T_3$) est rendue en outre dépendante de la température de la boîte de vitesses et/ou du type de saut de vitesse.

**10.** Procédé selon la revendication 1, **caractérisé en ce que** la variation dans le temps du processus de synchronisation est identifiée par l'unité électronique (8) à partir d'une variation de la vitesse de rotation ($N_F$) d'un arbre d'entrée (17) de la boîte de vitesses.

**11.** Procédé selon la revendication 10, **caractérisé en ce qu'**on forme le gradient de la vitesse de rotation ($T_E$), et qu'on calcule à partir de ce gradient la durée respective ($T_1$) du processus de synchronisation.

**12.** Procédé selon la revendication 11, **caractérisé en ce qu'**on calcule la durée ($T_1$) du processus de synchronisation à partir de :

$$T_1 = (N_A - N_B)/\frac{\Delta N_E}{\Delta t}$$

avec

$N_A =$ vitesse de rotation de l'arbre de sortie (18) de la boîte de vitesses (rapportée à l'arbre d'entrée de la boîte de vitesses),

$N_E =$ vitesse de rotation de l'arbre d'entrée (17) de la boîte de vitesses,

$\Delta N_E/\Delta t =$ gradient de la vitesse de rotation $N_E$ entre $t_2$ et $t_3$.

**13.** Procédé selon une ou plusieurs des revendications 1 à 12, **caractérisé en ce que** l'instant $t_2$, pour la commande du générateur de signaux (9) est calculé à partir de :

$$t_2' = t_2 + (T_1 - T_2)$$

avec

$t_2 =$ instant du coude dans $N_E$ ou S
$T_1 =$ durée de l'opération de synchronisation
$T_2 =$ temps de réaction minimum du conducteur.

**14.** Unité de commande électronique de boîte de vitesses pour utiliser le procédé selon une ou plusieurs des revendications 1 à 13, comportant un microprocesseur ($\mu$P), un générateur d'instructions de changement de vitesse de commutation (J) pour déclencher un changement de vitesse, et un dispositif de signalisation en retour (9) pour la signalisation en retour d'un changement de vitesse complet au conducteur, **caractérisé en ce que** pour l'identification du processus de synchronisation, des capteurs de déplacement (14) sont montés sur des manchons coulissants (15, 16) ou sur un de leurs dispositifs d'actionnement (12, 13), et que le dispositif de signalisation en retour (9) délivre la signalisation en retour déjà au processus de synchronisation de la boîte de vitesses (3).

**15.** Unité de commande électronique de boîte de vitesse selon la revendication 4, **caractérisée en ce que** les vitesses de rotation ($N_E$, $N_A$) de l'arbre d'entrée (17) de la boîte de vitesses et de l'arbre de sortie (18) de la boîte de vitesses peuvent être détectées au moyen de capteurs (11, 20).

**16.** Unité de commande électronique de boîte de vitesse selon la revendication 4, **caractérisée en ce que** le dispositif de signalisation en retour (9) est agencé en mode optique, acoustique ou haptique.

Fig. 1

EP 0 905 418 B1

Fig. 2

EP 0 905 418 B1